# FASCICULE DE BREVET EUROPEEN

(11) **EP 2 754 586 B1**
(45) Date de publication et mention de la délivrance du brevet: **06.04.2016**
(21) Numéro de dépôt: 14150842.4
(22) Date de dépôt: 10.01.2014
(51) Int. Cl.: B60R 11/06, B62D 43/10, B25H 3/02

(54) **Organe de rangement pour un logement pour roue de secours de véhicule automobile**
Verstauungselement für den Stauraum eines Reserverads eines Kraftfahrzeugs
Storage member for a spare-wheel housing of a motor vehicle

(30) Priorité: 14.01.2013 FR 1350301
(43) Date de publication de la demande: 16.07.2014
(73) Titulaire: Faurecia Automotive Industrie, 92000 Nanterre (FR)
(72) Inventeur: Marcq, Philippe - Jean, 08210 MOUZON (FR)
(74) Mandataire: Blot, Philippe Robert Emile

(56) Documents cités:
- DE-A1- 19 711 387
- DE-U1- 8 127 183
- FR-A1- 2 893 570
- US-A- 5 447 110

## Description

La présente invention concerne un organe de rangement pour un logement pour roue de secours de véhicule automobile.

Certains véhicules automobiles comportent un logement pour une roue de secours, généralement aménagé dans le coffre arrière du véhicule, notamment sous un plancher de ce coffre. A cet effet, le plancher de coffre comporte une trappe d'accès audit logement, ou est amovible.

Afin d'augmenter l'espace de stockage disponible dans le véhicule automobile, on connaît déjà, dans l'état de la technique, un organe de rangement destiné à être disposé dans ledit logement, en étant empilé au dessus d'une roue de secours logée dans ce logement. Un tel organe de rangement est par exemple destiné au rangement d'outils, notamment d'outils adaptés pour le remplacement d'une roue, par exemple un cric et/ou une clé à roue, notamment une clé en croix.

Le document US 5 447 110 décrit un contenant de hauteur variable, pouvant être considéré comme formant un organe de rangement semblable à celui du préambule de la revendication 1.

Dans la présente description, on appellera « hauteur » la dimension verticale d'un élément dans le véhicule automobile, en particulier la dimension perpendiculaire au plancher du coffre en ce qui concerne le logement et ce qui y est logé.

On notera que la hauteur du logement est sensiblement égale à la hauteur de l'ensemble formé par la roue et l'organe de rangement empilés. Ainsi, l'organe de rangement permet notamment de caler la roue dans le logement, cet organe de rangement étant intercalé entre cette roue et le plancher de coffre.

Dans certains cas, la roue de secours logée dans ledit logement présente une dimension axiale (qui correspond à sa hauteur lorsqu'elle est dans le logement, conformément à la définition ci-dessus) qui est inférieure à la dimension axiale (ou hauteur) d'une roue classique utilisée sur le véhicule. Une telle roue de secours est également appelée « galette ».

Lorsque le véhicule automobile est muni d'une telle roue galette dans son logement pour roue de secours, on prévoit un organe de rangement présentant une hauteur suffisamment importante pour que la hauteur de l'ensemble formé par la roue galette et cet organe de rangement soit sensiblement égale à la hauteur du logement.

En cas de crevaison sur l'une des quatre roues classiques du véhicule, la roue crevée est généralement disposée dans le logement après avoir été remplacée par la roue galette de secours. Or, la hauteur de cette roue crevée est supérieure à celle de la roue galette de secours, si bien que la hauteur de l'ensemble formé par cette roue crevée et l'organe de rangement dépasse alors la hauteur du logement.

Il en résulte que l'organe de rangement dépasse dans le coffre du véhicule, et qu'il n'est pas possible de refermer la trappe d'accès au logement ou de remettre en place le plancher. Cela est particulièrement problématique lorsque le coffre était rempli, car il est alors difficile de replacer tout le contenu initial du coffre.

L'invention a notamment pour but de remédier à cet inconvénient, en fournissant un organe de rangement autorisant la fermeture de la trappe d'accès au logement ou la remise en place du plancher, à la fois lorsque la roue logée dans le logement est une roue galette et lorsque cette roue est une roue classique.

A cet effet, l'invention a notamment pour un objet un organe de rangement selon la revendication 1.

Grâce à cette configuration en deux parties, il est possible de modifier la hauteur de l'organe de rangement, pour adapter cette hauteur à celle de la roue. Ainsi, en cas de roue galette, l'organe de rangement sera disposé en position déployée, et en cas de roue classique, l'organe de rangement sera disposé en position rétractée.

Ainsi, la hauteur de l'ensemble formé par la roue et l'organe de rangement peut rester sensiblement égale à la hauteur du logement, si bien que sa trappe d'accès peut être refermée sans difficulté, ou le plancher remis en place, même lorsque la roue est une roue classique, de hauteur supérieure à celle d'une roue de secours de type galette.

De manière optionnelle, un organe de rangement selon l'invention peut présenter l'une ou plusieurs des caractéristiques suivantes, prises seules ou selon toutes les combinaisons techniquement envisageables.
- Les secondes saillies présentent une longueur supérieure à celle des premières saillies, chaque seconde saillie comprend une encoche, chaque première saillie comporte une forme d'emboîtement complémentaire d'une encoche correspondante, et chaque encoche est destinée à recevoir la forme d'emboîtement complémentaire dans la position déployée.
- La partie inférieure et la partie supérieure présentent chacune une forme générale de révolution autour d'un axe central, et sont disposées coaxialement.
- L'une des parties inférieure ou supérieure présente une surface intérieure munie de plots faisant saillie en direction de l'autre des parties inférieure ou supérieure, cette autre partie inférieure ou supérieure présente une surface intérieure munie d'orifices de réception des plots de support, dans la position rétractée, chaque plot de support est logé dans un orifice de réception complémentaire, et dans la position déployée, chaque plot de support repose sur la surface intérieure de ladite autre partie inférieure ou supérieure.
- Les plots de support étant disposés circonférentiellement sur la surface intérieure de ladite une des parties inférieure ou supérieure, les intervalles circonférentiels entre deux plots adjacents circonférentiellement sont différents.

L'invention concerne également un ensemble pour un véhicule automobile, comprenant un logement pour une roue de secours, une roue et un organe de rangement tel que défini précédemment.

L'invention sera mieux comprise à la lecture de la description qui va suivre, donnée uniquement à titre d'exemple et faite en se référant aux figures annexées, parmi lesquelles :
- la figure 1 est une vue en perspective d'un organe de rangement selon un exemple de mode de réalisation de l'invention, en position rétractée ;
- la figure 2 est une vue schématique en coupe transversale de l'organe de rangement de la figure 1, disposé dans un logement pour roue de secours de véhicule automobile, en y étant empilé avec une roue de type classique ;
- la figure 3 est une vue similaire à la figure 1 de l'organe de rangement en position déployée ;
- la figure 4 est une vue similaire à la figure 2 de l'organe de rangement de la figure 3 disposé dans le logement pour roue de secours, en y étant empilé avec une roue de type galette ;
- les figures 5 et 6 sont des vues en perspective d'une partie supérieure de l'organe de rangement des figures 1 à 4, respectivement vue de dessus et de dessous ; et
- les figures 7 et 8 sont des vues en perspective d'une partie inférieure de l'organe de rangement des figures 1 à 4, respectivement vue de dessus et de dessous.

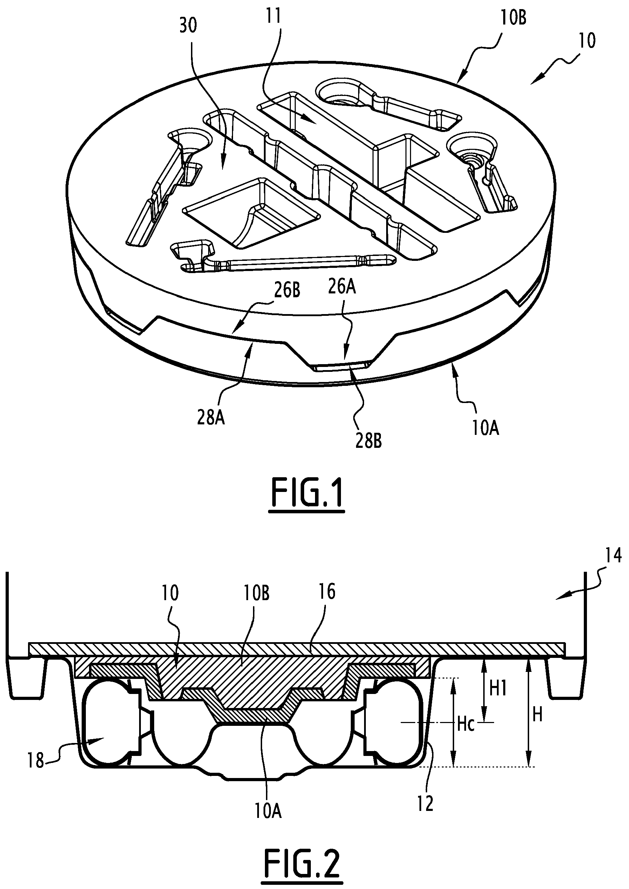

On a représenté sur la figure 1 un organe de rangement 10 selon un exemple de mode de réalisation de l'invention.

Conformément à l'exemple décrit, l'organe de rangement 10 présente une forme générale de révolution autour d'un axe central, et comporte au moins un logement 11 de rangement. Par exemple, chaque logement 11 est prévu pour recevoir un outil, notamment un outil pour le remplacement d'une roue, tel qu'un cric ou une clé de roue. A cet effet, chaque logement 11 peut présenter une forme complémentaire de celle d'un tel outil.

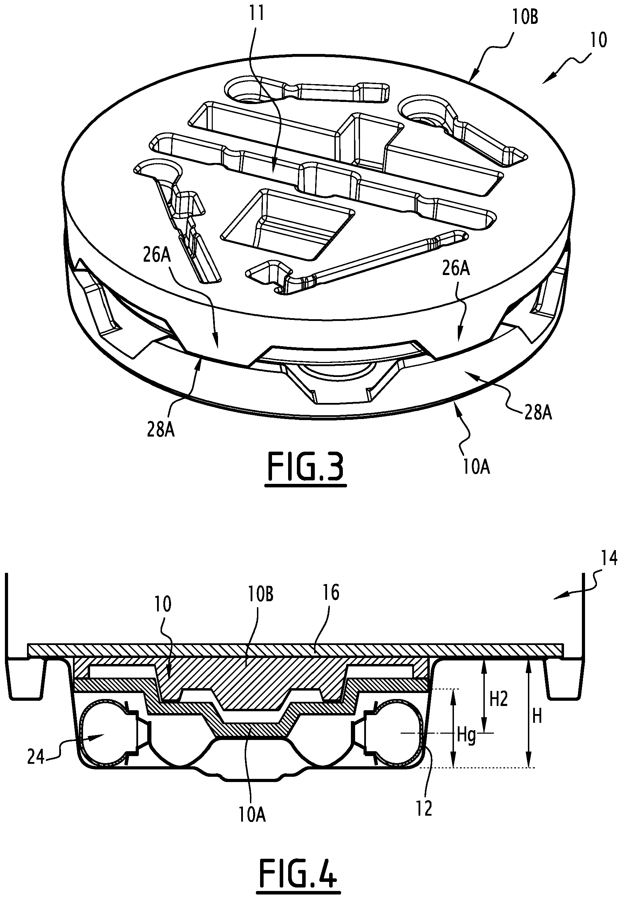

Comme cela sera décrit plus en détail par la suite, l'organe de rangement 10 comporte une partie inférieure 10A et une partie supérieure 10B, mobiles l'une par rapport à l'autre entre une position rétractée (représentée sur les figures 1 et 2), dans laquelle l'organe de rangement 10 présente une première hauteur H1, et une position déployée (représentée sur les figures 3 et 4), dans laquelle l'organe de rangement 10 présente une seconde hauteur H2 supérieure à la première H1. La différence de hauteur entre les seconde H2 et première H1 hauteurs correspond à une différence de hauteur entre celle d'une roue galette et celle d'une roue classique.

Les parties inférieure 10A et supérieure 10B présentent chacune une forme générale de révolution autour d'un axe central, et sont disposées coaxialement.

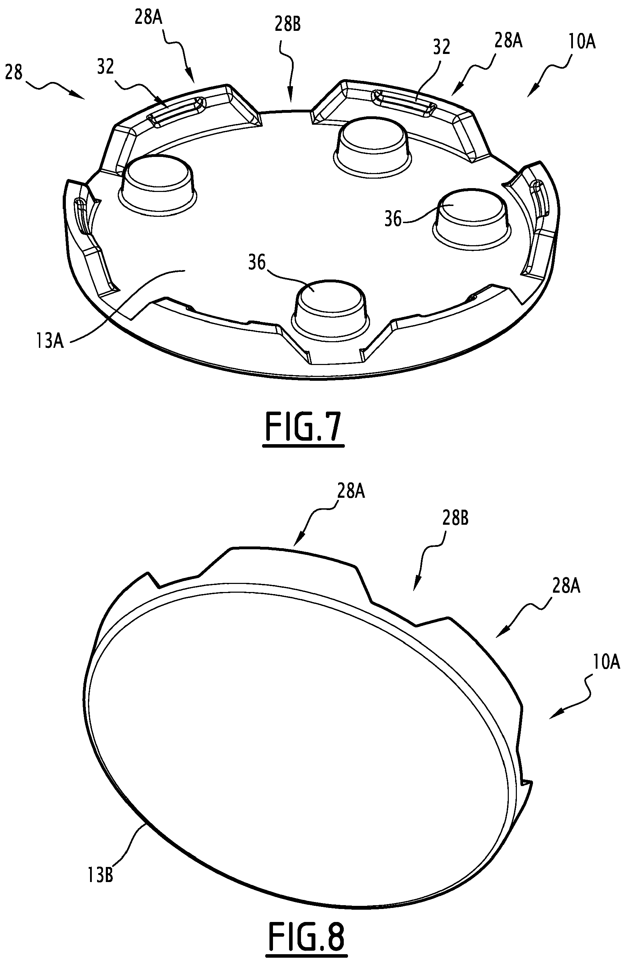

La partie inférieure 10A présente une surface intérieure 13A (visible sur la figure 7), destinée à être orientée vers la partie supérieure 10B, et une surface extérieure 13B (visible sur la figure 8).

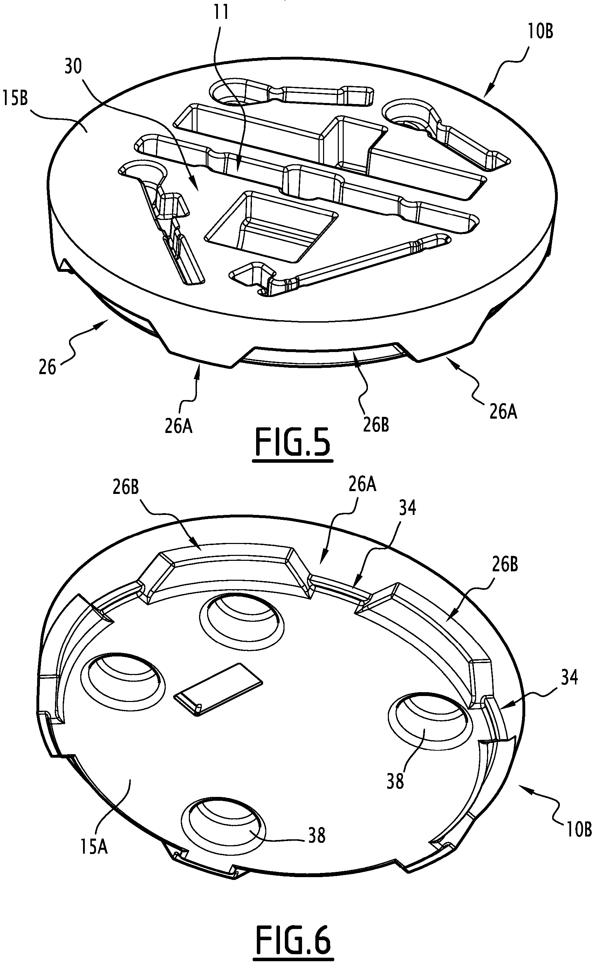

La partie supérieure 10B présente une surface intérieure 15A (visible sur la figure 6), destinée à être orientée vers la partie inférieure 10A, et une surface extérieure 15B (visible sur la figure 5). Chaque logement de rangement 11 est ménagé dans la partie supérieure 10B, notamment dans sa surface extérieure 15B.

L'organe de rangement 10 est destiné à équiper un logement 12 pour roue de secours de véhicule automobile. Ledit logement 12, notamment représenté sur les figures 2 et 4, est aménagé dans un coffre arrière 14 du véhicule, notamment sous un plancher 16 de ce coffre 14. A cet effet, le plancher de coffre 16 comporte une trappe d'accès audit logement 12, ou est en variante amovible.

Le logement 12 présente une profondeur, également appelée hauteur H, suffisante pour loger un ensemble formé par une roue et l'organe de logement 10. Cette hauteur H correspond à la distance entre un fond du logement et le plancher 16, prise perpendiculairement à ce plancher 16.

Ainsi, la partie inférieure 10A est destinée à être agencée dans le logement 12 en contact avec la roue logée dans ce logement 12. En particulier, la surface extérieure 13B de cette partie inférieure 10A est agencée en contact avec cette roue.

Par ailleurs, la partie supérieure 10B est destinée à être agencée dans le logement 12, au dessus de la partie inférieure 10A. Chaque logement de rangement 11, ménagé dans la partie supérieure 10B, est alors accessible depuis le coffre 14, par exemple à travers la trappe d'accès dans le cas où le plancher 16 est muni d'une telle trappe.

L'organe de rangement 10 selon l'invention peut être utilisé indifféremment avec une roue de type classique, et une roue de type galette.

On appelle « roue classique » une roue du même type que les quatre roues équipant le véhicule automobile considéré, en utilisation normale.

On appelle « roue galette » une roue de secours, destinée à équiper provisoirement le véhicule automobile considéré, en cas de crevaison de l'une des quatre roues classiques. Une roue galette présente une dimension axiale inférieure à celle d'une roue classique, ladite dimension axiale étant considérée suivant l'axe de révolution de la roue.

Dans le cas représenté sur la figure 2, la roue est une roue classique 18, utilisée usuellement pour le véhicule automobile considéré. Dans ce qui suit, la dimension axiale maximale de la roue classique 18, également appelée hauteur, sera désignée par la référence Hc. On notera que la roue classique 18 ne présente pas une dimension axiale constante sur toute sa surface. Ainsi, la hauteur Hc correspond à l'encombrement de la roue classique 18 dans le logement 12.

La hauteur Hc de la roue classique 18 étant relativement importante, étant notamment supérieure à la hauteur d'une roue galette, la hauteur de l'organe de rangement 10 doit être minimale pour que l'ensemble formé par cet organe de rangement 10 et cette roue classique 18 présente une hauteur sensiblement égale à la hauteur H du logement.

Ainsi, l'organe de rangement 10 est disposé dans sa position rétractée lorsque la roue logée dans le logement 12 est une roue classique 18. La hauteur de l'organe de rangement 10 dans cette position rétractée, correspondant à sa dimension minimale parallèlement à son axe, est notée H1.

Dans le cas représenté sur la figure 4, la roue est une roue galette 24, c'est-à-dire une roue de secours provisoire de dimension axiale inférieure à celle d'une roue classique. Dans ce qui suit, la dimension axiale maximale de la roue galette 24, également appelée hauteur, sera désignée par la référence Hg. On notera que la roue galette 24 ne présente pas une dimension axiale constante sur toute sa surface. La hauteur Hg correspond à l'encombrement de la roue galette 24 dans le logement 12.

La hauteur Hg de la roue galette 24 étant relativement faible, étant notamment inférieure à la hauteur Hc d'une roue classique 18, la hauteur de l'organe de rangement 10 doit être maximale pour que l'ensemble formé par cet organe de rangement 10 et cette roue classique 18 présente une hauteur sensiblement égale à la hauteur H du logement.

Ainsi, l'organe de rangement 10 est disposé dans sa position déployée lorsque la roue logée dans le logement 12 est une roue galette 24. La hauteur de l'organe de rangement 10 dans cette position déployée, correspondant à sa dimension maximale parallèlement à son axe, est notée H2, et elle est supérieure à hauteur H1 de l'organe de rangement 10 dans la position rétractée.

En pratique, tant que la roue disposée dans le logement 12 est une roue galette 24, l'organe de rangement 10 est dans sa position déployée (figure 4). En cas de crevaison sur l'une des quatre roues du véhicule, la roue crevée est remplacée par la roue galette 24. Dans ce cas, cette roue crevée est généralement replacée dans le logement 12. L'organe de rangement 10 est alors disposé dans sa position rétractée (figure 2), pour que la hauteur de l'ensemble formé par cet organe de rangement 10 et la roue crevée 18 reste sensiblement égale à celle du logement 12, donc que cet organe de rangement 10 ne dépasse pas dans le coffre 14.

On notera que les formes et dimensions des parties inférieure 10A et supérieure 10B sont choisies en fonction des formes et dimensions standard des roues classiques et des roues galettes pour le véhicule automobile considéré.

En particulier, la hauteur H1 de l'organe de rangement en position rétractée correspond à la hauteur H du logement 12, à laquelle on soustrait la hauteur d'une roue classique 18 au niveau de sa jante (voir la figure 2).

De même, la hauteur H2 de l'organe de rangement en position déployée correspond à la hauteur H du logement 12, à laquelle on soustrait la hauteur d'une roue galette 24 au niveau de sa jante (voir la figure 4).

Par ailleurs, les diamètres des parties inférieure 10A et supérieure 10B sont sensiblement égaux, et sont également sensiblement égaux au diamètre d'une roue classique 18.

Les moyens pour déplacer les parties inférieure 10A et supérieure 10B entre les positions rétractée et déployée, et pour les maintenir dans la position rétractée ou dans la position déployée, peuvent être de tout type envisageable. On décrira ci-dessous un exemple de tels moyens.

Comme cela est notamment représenté sur les figures 5 et 6, la partie supérieure 10B présente une succession de premières saillies 26A et de premiers creux 26B, formant des premiers créneaux 26, les premières saillies 26A étant destinées à être dirigées vers la partie inférieure 10A. Ces premiers créneaux 26 sont disposés à la périphérie de la partie supérieure 10B.

De la même manière, comme cela est notamment représenté sur les figures 7 et 8, la partie inférieure 10A présente une succession de secondes saillies 28A et de seconds creux 28B, formant des seconds créneaux 28, les secondes saillies 28A étant destinées à être dirigées vers la partie supérieure 10B. Ces seconds créneaux 28 sont disposés à la périphérie de la partie inférieure 10A.

Les premiers 26 et seconds 28 créneaux présentent des formes complémentaires, si bien qu'en position rétractée, les premiers 26 et seconds 28 créneaux sont emboîtés. En d'autres termes, les premières saillies 26A coopèrent avec les seconds creux 28B, et les secondes saillies 28A coopèrent avec les premiers creux 26B, comme cela est notamment représenté sur la figure 1.

Il apparaît clairement qu'en disposant les parties inférieure 10A et supérieure 10B de telle sorte que les premières saillies 26A reposent sur les secondes saillies 28A, l'organe de rangement 10 présente une hauteur supérieure à celle qu'il présente dans la position rétractée. On est dans ce cas dans la position déployée.

Ainsi, pour passer de la position rétractée (figure 1) à la position déployée (figure 3), il suffit de soulever la partie supérieure 10B pour désengager les premiers 26 et seconds 28 créneaux, puis de faire tourner la partie supérieure 10B autour de son axe central de manière à disposer les premières saillies 26A en regard des secondes saillies 28A. On relâche ensuite la partie supérieure 10B, de sorte que les premières saillies 26A reposent sur les secondes saillies 28A, et on obtient ainsi la position déployée.

De même, pour passer de la position déployée (figure 3) à la position rétractée (figure 1), il suffit de soulever la partie supérieure 10B, puis de faire tourner la partie supérieure 10B autour de son axe central de manière à disposer les premières saillies 26A en regard des seconds creux 28B et les secondes saillies en regard des premiers creux 26B. On relâche ensuite la partie supérieure 10B, de sorte que les premiers 26 et seconds 28 créneaux soient emboîtés, et on obtient ainsi la position rétractée.

Afin de faciliter ces manipulations, la partie supérieure 10B comporte avantageusement une poignée 30, par exemple formée par un orifice dans cette partie supérieure 10B, permettant le passage des doigts d'un utilisateur pour prendre prise afin de soulever et de faire tourner cette partie supérieure 10B autour de son axe central.

Avantageusement, afin d'assurer le maintien de l'organe de rangement 10 en position déployée, chaque seconde saillie 28A comprend une encoche 32 (visible sur la figure 7), et chaque première saillie 26A comporte une forme d'emboîtement 34 (visible sur la figure 6) complémentaire d'une encoche 32 correspondante. Chaque encoche 32 est destinée à recevoir la forme d'emboîtement 34 complémentaire dans la position déployée, comme cela est notamment représenté sur la figure 3.

Ainsi, en position déployée, les formes d'emboîtement 34 coopèrent avec les encoches 32 pour immobiliser, à la fois radialement et en rotation, la partie inférieure 10A par rapport à la partie supérieure 10B. Il est alors nécessaire de soulever la partie supérieure 10B pour désengager les formes d'emboîtement 34 des encoches 32 pour pouvoir passer de la position déployée à la position rétractée.

Par exemple, chaque encoche 32 est formée par un évidement à angle droit ménagé sur un bord radialement intérieur d'une seconde saillie 28A, et chaque forme complémentaire 34 est formé par un évidement à angle droit ménagé sur un bord radialement extérieur d'une première saillie 26A.

On notera que, afin de permettre de ménager des encoches 32 dans les secondes saillies 28A, chaque seconde saillie 28A présente avantageusement une dimension circonférentielle plus grande que la dimension circonférentielle de chaque première saillie 26A. Plus particulièrement, chaque encoche 32 présente une dimension circonférentielle sensiblement égale (légèrement supérieure) à la dimension circonférentielle de chaque première saillie 26A.

Avantageusement, comme cela est représenté sur la figure 7, la surface intérieure 13A de la partie inférieure 10A est munie de plots de support 36 faisant saillie depuis la surface intérieure 13A, en direction de la partie supérieure 10B.

Par ailleurs, comme cela est représenté sur la figure 6, la surface intérieure 15A de la partie supérieure 10B est munie d'orifices 38 de réception des plots de support 36, lesdits orifices de réception 38 étant ménagés de telle sorte que chaque plot de support 36 est logé dans un orifice de réception 38 complémentaire dans la position rétractée.

En revanche, dans la position déployée, les plots de support 36 ne sont plus disposés en regard des orifices 38 correspondant, si bien que chaque plot de support 36 repose sur la surface intérieure 15A de la partie supérieure 10B. Chaque plot de support 36 forme donc un support supplémentaire de la partie supérieure 10B sur la partie inférieure 10A.

Dans l'exemple décrit, les plots de support 36 sont disposés de façon à ne coïncider avec les orifices 38 que dans une seule disposition angulaire de la partie supérieure 10B par rapport à la partie inférieure 10A, afin de remplir une fonction de détrompeur. A cet effet, on disposera par exemple les plots de support 36 de sorte que les intervalles circonférentiels entre deux plots de support 36 adjacents circonférentiellement sont différents. Conformément à un autre exemple, les plots de support 36 pourraient être disposés à des distances radiales différentes depuis l'axe central.

En variante, les plots de support 36 peuvent être disposés de façon à pouvoir tous coïncider avec des orifices 38 dans plusieurs dispositions de la partie supérieure 10B par rapport à la partie inférieure 10A. A cet effet, on disposera par exemple les plots de support 36 de sorte que les intervalles circonférentiels entre deux plots adjacents circonférentiellement sont tous égaux.

Conformément à une autre variante, les plots de support 36 pourraient être agencés sur la partie supérieure 10B, et les orifices 38 ménagés sur la partie inférieure 10A.

On notera que l'invention n'est pas limitée au mode de réalisation précédemment décrit, mais pourrait présenter diverses variantes sans sortir du cadre des revendications.

En particulier, on pourrait prévoir d'autres moyens adaptés pour disposer les première et seconde parties en position rétractée ou déployée.

## Revendications

1. Organe de rangement (10) pour un logement (12) pour roue de secours de véhicule automobile, comportant :
- une partie inférieure (10A), destinée à être agencée dans le logement (12) en contact avec une roue (18 ; 24) logée dans ce logement (12), et
- une partie supérieure (10B), destinée à être agencée dans le logement (12) au dessus de la partie inférieure (10A) en contact avec un plancher de coffre (16) du véhicule automobile, la partie supérieure (10B) comportant au moins un logement de rangement (11), notamment de rangement d'outils,
les parties inférieure (10A) et supérieure (10B) étant mobiles l'une par rapport à l'autre entre une position rétractée, dans laquelle l'organe de rangement (10) présente une première hauteur (H1), et une position déployée, dans laquelle l'organe de rangement présente une seconde hauteur (H2) supérieure à la première (H1),
**caractérisé en ce que** :
- l'une des parties inférieure (10A) ou supérieure (10B) présente une succession de premières saillies (26A) et de premiers creux (26B), formant des premiers créneaux (26), les premières saillies (26A) étant dirigées vers l'autre des parties inférieure (10A) ou supérieure (10B),
- l'autre des parties inférieure (10A) ou supérieure (10B) présente une succession de secondes saillies (28A) et de seconds creux (28B), formant des seconds créneaux (28), les secondes saillies (28A) étant dirigées vers ladite une des parties inférieure (10A) ou supérieure (10B),
- dans la positions rétractée, les premiers (26) et seconds (28) créneaux sont emboîtés, de sorte que les premières saillies (26A) coopèrent avec les seconds creux (28B), et les secondes saillies (28A) coopèrent avec les premiers creux (26B), et
- dans la position déployée, les premières saillies (26A) reposent sur les secondes saillies (28A).

2. Organe de rangement (10) selon la revendication 1, dans lequel :
- les secondes saillies (28A) présentent une longueur supérieure à celle des premières saillies (26A),
- chaque seconde saillie (28A) comprend une encoche (32),
- chaque première saillie (26A) comporte une forme d'emboîtement (34) complémentaire à une encoche (32) correspondante,
- chaque encoche (32) est destinée à recevoir la forme d'emboîtement complémentaire (34) dans la position déployée.

3. Organe de rangement (10) selon l'une quelconque des revendications précédentes, dans laquelle la partie inférieure (10A) et la partie supérieure (10B) présentent chacune une forme générale de révolution autour d'un axe central, et sont disposées coaxialement.

4. Organe de rangement (10) selon l'une quelconque des revendications précédentes, dans lequel :
- l'une des parties inférieure (10A) ou supérieure (10B) présente une surface intérieure (13A) munie de plots (36) faisant saillie en direction de l'autre des parties inférieure (10A) ou supérieure (10B),
- cette autre partie inférieure (10A) ou supérieure (10B) présente une surface intérieure (15A) munie d'orifices (38) de réception des plots de support (36),
- dans la position rétractée, chaque plot de support (36) est logé dans un orifice de réception (38) complémentaire, et
- dans la position déployée, chaque plot de support (36) repose sur la surface intérieure (15A) de ladite autre partie inférieure (10A) ou supérieure (10B).

5. Organe de rangement (10) selon la revendication 4, dans lequel les plots de support (36) étant disposés circonférentiellement sur la surface intérieure (13A) de ladite une des parties inférieure (10A) ou supérieure (10B), les intervalles circonférentiels entre deux plots (36) adjacents circonférentiellement sont différents.

6. Ensemble pour véhicule automobile, comprenant un logement (12) pour roue de secours, une roue (18 ; 24) et un organe de rangement (10) selon l'une quelconque des revendications précédentes.

## Patentansprüche

1. Verstauungselement (10) für einen Stauraum (12) eines Reserverads,
das Folgendes aufweist:
- einen unteren Bereich (10A), der zur Anordnung in dem Stauraum (12) in Kontakt mit einem in diesem Stauraum verstauten Rad (18; 24) ausgelegt ist, und
- einen oberen Bereich (10B), der zur Anordnung in dem Stauraum (12) über dem unteren Bereich (10A) in Kontakt mit einem Kofferraumboden (16) des Fahrzeugs ausgelegt ist, wobei der obere Bereich (10B) mindestens einen Stauraum (11), insbesondere zum Verstauen von Werkzeugen aufweist,
wobei der untere Bereich (10A) und obere Bereich (10B) relativ zueinander beweglich sind, und zwar zwischen einer zurückgezogenen Position, in der das Verstauungselement (10) eine erste Höhe (H1) aufweist, und einer ausgefahrenen Position, in der das Verstauungselement eine zweite Höhe (H2) aufweist, die größer als die erste Höhe (H1) ist,
**dadurch gekennzeichnet,**
- **dass** der eine von dem unteren Bereich (10A) oder dem oberen Bereich (10B) eine Folge von ersten Vorsprüngen (26A) und ersten Vertiefungen (26B) aufweist, die erste Aussparungen (26) bilden, wobei die ersten Vorsprünge (26A) in Richtung des anderen von dem unteren Bereich (10A) oder dem oberen Bereich (10B) zeigen,
- **dass** der andere von dem unteren Bereich (10A) oder dem oberen Bereich (10B) eine Folge von zweiten Vorsprüngen (28A) und zweiten Vertiefungen (28B) aufweist, die zweite Aussparungen (26) bilden, wobei die zweiten Vorsprünge (26A) in Richtung des einen von dem unteren Bereich (10A) oder dem oberen Bereich (10B) zeigen,
- **dass** in der zurückgezogenen Position die ersten Aussparungen (26) und die zweiten Aussparungen (28) ineinander geschachtelt sind, derart, dass die ersten Vorsprünge (26A) mit den zweiten Vertiefungen (28B) zusammenwirken, und die zweiten Vorsprünge (28A) mit den ersten Vertiefungen (26B) zusammenwirken, und
- **dass** in der ausgefahrenen Position die ersten Vorsprünge (26A) auf den zweiten Vorsprüngen (28A) aufliegen.

2. Verstauungselement (10) nach Anspruch 1, wobei:
- die zweiten Vorsprünge (28A) eine Länge aufweisen, die größer ist als diejenige der ersten Vorsprünge (26A),
- jeder zweite Vorsprung (28A) jeweils eine Einkerbung (32) aufweist,
- jeder erste Vorsprung (26A) jeweils eine Verschachtelungsform (34) komplementär zu einer entsprechenden Einkerbung (32) aufweist,
- jede Einkerbung (32) jeweils zur Aufnahme der komplementären Verschachtelungsform in der ausgefahrenen Position ausgelegt ist.

3. Verstauungselement (10) nach einem der vorhergehenden Ansprüche, wobei der untere Bereich (10A) und der obere Bereich (10B) jeweils eine durchgängige Rotationsform um eine Mittelachse aufweisen und koaxial zueinander angeordnet sind.

4. Verstauungselement (10) nach einem der vorhergehenden Ansprüche, wobei:
- der eine von dem unteren Bereich (10A) oder dem oberen Bereich (10B) eine mit Stützstellen (36) versehene Innenfläche (13A) aufweist, die in Richtung des anderen von dem unteren Bereich (10A) oder dem oberen Bereich (10B) vorstehen,
- dieser andere untere Bereich (10A) oder obere Bereich (10B) eine mit Aufnahmeöffnungen (38) für die Stützstellen (36) versehene Innenfläche (15A) aufweist,
- in der zurückgezogenen Position jede Stützstelle (36) in einer komplementären Aufnahmeöffnung (38) aufgenommen ist, und
- in der ausgefahrenen Position jede Stützstelle (36) auf der Innenfläche (15A) des anderen von dem unteren Bereich (10A) oder dem oberen Bereich (10B) aufsitzt.

5. Verstauungselement (10) nach Anspruch 4,
wobei die Stützstellen (36) in Umfangsrichtung auf der Innenfläche (13A) des einen von dem unteren Bereich (10A) oder dem oberen Bereich (10B) angeordnet sind, wobei die Intervalle in Umfangsrichtung zwischen zwei nebeneinander liegenden Stützstellen (36) in Umfangsrichtung unterschiedlich sind.

6. Anordnung für ein Kraftfahrzeug,
die Folgendes aufweist:
einen Reserverad-Stauraum (12), ein Rad (18; 24) und ein
Verstauungselement (10) gemäß einem der vorhergehenden Ansprüche.

## Claims

1. Storage member (10) for a housing (12) for a spare wheel of a motor vehicle, comprising:
- a lower part (10A) which is to be arranged in the housing (12) in contact with a wheel (18; 24) housed in the housing (12), and
- an upper part (10B) which is to be arranged in the housing (12) above the lower part (10A) in contact with a boot floor (16) of the motor vehicle, the upper part (10B) having at least one storage housing (11), especially for storing tools,
the lower (10A) and upper (10B) parts being movable relative to one another between a retracted position, in which the storage member (10) has a first height (H1), and a deployed position, in which the storage member has a second height (H2) greater than the first (H1),
**characterised in that**:
- one of the lower (10A) or upper (10B) parts has a series of first projections (26A) and first hollows (26B) forming first crenellations (26), the first projections (26A) being directed towards the other of the lower (10A) or upper (10B) parts,
- the other of the lower (10A) or upper (10B) parts has a series of second projections (28A) and second hollows (28B) forming second crenellations (28), the second projections (28A) being directed towards said one of the lower (10A) or upper (10B) parts,
- in the retracted position, the first (26) and second (28) crenellations are interlocked, so that the first projections (26A) cooperate with the second hollows (28B) and the second projections (28A) cooperate with the first hollows (26B), and
- in the deployed position, the first projections (26A) rest on the second projections (28A).

2. Storage member (10) according to claim 1, wherein:
- the second projections (28A) have length greater than that of the first projections (26A),
- each second projection (28A) has a notch (32),
- each first projection (26A) has an interlocking form (34) complementary to a corresponding notch (32),
- each notch (32) is to receive the complementary interlocking form (34) in the deployed position.

3. Storage member (10) according to any one of the preceding claims, wherein the lower part (10A) and the upper part (10B) each have a general form of revolution about a central axis and are arranged coaxially.

4. Storage member (10) according to any one of the preceding claims, wherein:
- one of the lower (10A) or upper (10B) parts has an inside surface (13A) provided with studs (36) which project towards the other of the lower (10A) or upper (10B) parts,
- that other lower (10A) or upper (10B) part has an inside surface (15A) provided with orifices (38) for receiving the support studs (36),
- in the retracted position, each support stud (36) is housed in a complementary receiving orifice (38), and
- in the deployed position, each support stud (36) rests on the inside surface (15A) of said other lower (10A) or upper (10B) part.

5. Storage member (10) according to claim 4, wherein the support studs (36) are arranged circumferentially on the inside surface (13A) of said one of the lower (10A) or upper (10B) parts and the circumferential intervals between two circumferentially adjacent studs (36) are different.

6. Assembly for a motor vehicle, comprising a housing (12) for a spare wheel, a wheel (18; 24) and a storage member (10) according to any one of the preceding claims.
